# EUROPEAN PATENT APPLICATION

(11) **EP 1 108 924 A2**
(43) Date of publication of application: **20.06.2001**
(21) Application number: 00120645.7
(22) Date of filing: 21.09.2000
(51) Int. Cl.: F16H 63/30, F16D 23/04

(54) **Synchronization device for the reverse ratio of a motor vehicle gearbox, of the type involving a sliding gear**

(30) Priority: 17.12.1999 IT TO991107
(71) Applicant: FIAT AUTO S.p.A., 10135 Torino (IT)
(72) Inventor: Casella, Sebastiano, 10024 Moncalieri (TO) (IT)
(74) Representative: Di Francesco, Gianni

(57) **Abstract**

Synchronization device for the reverse ratio of a motor vehicle gearbox, of the type involving two sliding gears (5, 6) rotating on a shaft (4), where a cup-like spring (24) is force fitted inside an anular salient (20) of the first gear, and said spring engages, by way of its border, with the lower wall (27) of a groove (18) on the second gear, when the second gear (6) is shifted on said shaft (4).

## Description

The object of the present invention is a device providing the slowing down of the main shaft of the gearbox, making it possible to obtain the syncronized engagement of the reverse ratio in a reverse gear assembly with double sliding gears.

Various syncronization devices for reverse ratio engagement are known to those skilled in the art ; from heavy, expensive authentic syncronization rings to lighter and less expensive devices that are not very reliable.

It is an object of the present invention to carry out a device for primary gearbox shaft deceleration, for the reliable, simple and inexpensive syncronized engagement of the reverse ratio.

This and other objects will become apparent from the following description, obtained by way of a syncronization device for the reverse ratio of a mechanical gearbox for motor vehicles, of the type involving two sliding gears, according to the characteristics of the first claim.

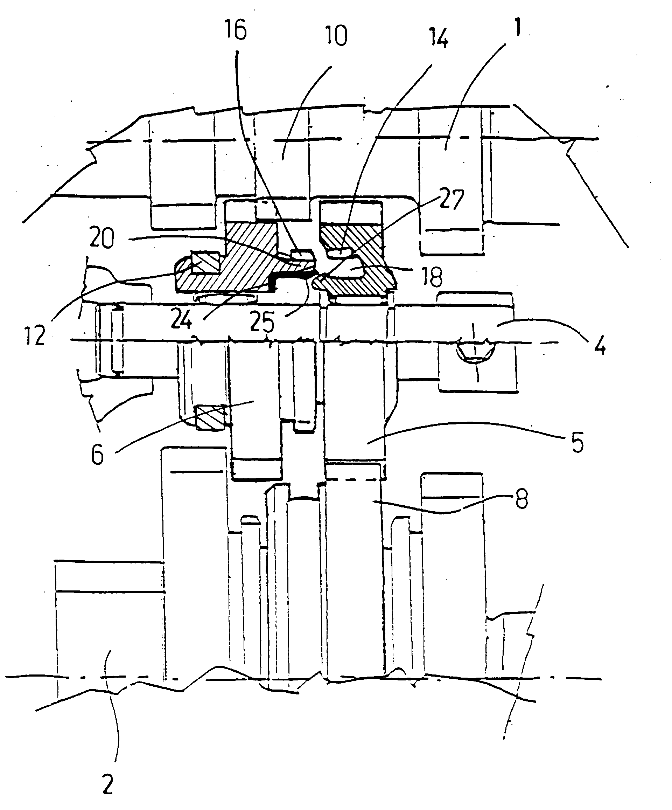

Other characteristics and advantages will become clear by the following description, reference made to the accompanying drawing, provided as a non-limiting example, in which sections of the shafts of a mechanical gearbox for motor vehicles can be seen, with the group of gears for the reverse ratio.

With reference to the figure, reference number 1 indicates the primary shaft of the mechanical gearbox of a motor vehicle, connected to the motor shaft by way of a clutch (not illustrated). Number 2 indicates the secondary shaft of the gearbox, that can be connected by way of appropriate gearings to the primary shaft, and aimed at transmitting the movement of the motor shaft to the wheels of the vehicle by way of a differential device (not illustrated). A third shaft 4 is located parallel to the first two and designed to carry, rotating on the latter, two sliding gears 5 and 6, engaged for the shifting of the reverse ratio.

One (5) of said gears engages in sleeve 8, of the 1st and 2nd ratio, located on secondary shaft 2, and non shiftable along shaft 4. The second sliding gear 6 engages in a gear 10 obtained on the primary shaft, shiftable by way of a reverse ratio selector fork 12, to be engaged with gear 5, by way of frontal engagement gear teeth 14 and 16.

The gear teeth are obtained both on the upper wall of an axial anular groove 18, obtained in the non-shiftable sliding gear 5, and on the external wall of an anular axial salient 20, designed to be inserted in said anular groove 18, by way of a shifting movement of gear 6, caused by the actioning of ratio selector fork 12. A cup-like spring with open circumference 24, preferably made of music wire, is fitted in the internal wall of anular salient 20, and hereby of the cylindrical cavity created by said salient. Aside from an anular radial internal projection 25, forming a conical wall opened towards a conical anular salient 27 of corresponding and contrary taper, obtained on the lower wall of anular groove 18, the edge of said spring also presents a series of longitudinal notches (not illustrated) making it possible to create a discontinuous contact surface.

By activating ratio selector fork 12 to obtain the engagement of the reverse ratio, gear 6 moves along shaft 4, from a first rest position where the reverse ratio is not engaged, to a second active position in which the reverse ratio is engaged. The approach of gear 6 to gear 5 creates a contact point with the conical radial projection 25 of cup-like spring 24 with the surface of the conical salient 27 on the lower wall of groove 18. This causes friction between both walls, with the subsequent syncronization of the rotation speeds of the gears, with frontal teeth 14 and 16 being engaged respectively, without resistance or friction.

It is clear that the type of design described and the materials used can be changed without necessarily losing the protection according to present invention.

## Claims

1. Syncronization device for the reverse ratio of a mechanical gearbox for motor vehicles, of the type involving two sliding gears (5, 6) rotating on a shaft (4), the first (5) being coupled'to the the secondary shaft and the second (6) being shiftable, coupled to the primary shaft, two frontal teeth (14, 16) one including an anular axial groove (18) of the first gear and the other an anular axial salient (20) of the second gear, said salient being designed to be inserted in said throat for the engagement of said frontal teeth ; characterized by the fact that a cup-like spring (24) is force fitted inside said anular salient (20), and is fitted to be engaged, with its edge, with the lower wall (27) of said groove (18) when the second gear (6) is shifted on said shaft (4).

2. Device according to claim 1, characterized by the fact that the edge of the cup-like spring (24) has an internal radial anular projection (25) forming a conical wall, openend towards the groove (18).

3. Device according to claim 1, characterized by the fact that the edge of the cup-like spring (24) is equipped with a series of longitudinal notches.

4. Device according to claim 1, characterized by the fact that the lower wall of the axial groove (18) presents a salient (27) creating a conic wall, closed in the direction of the anular salient (20).

5. Device according to claim 1, characterized by the fact that the conicity of the edge of the spring (24) and of the salient on the lower wall of the groove (18) are substantially equal and opposite.

6. Device according to claim 1, characterized by the fact that spring (24) is manufactured in music wire.
